# EUROPEAN PATENT SPECIFICATION

(11) **EP 2 253 503 B1**
(45) Date of publication and mention of the grant of the patent: **28.11.2012**
(21) Application number: 10163494.7
(22) Date of filing: 20.05.2010
(51) Int. Cl.: B60N 2/28, B60N 2/42, B60N 2/427, B60R 21/207, B60N 2/48

(54) **Energy-dissipation system**
Energieverzehrsystem
Système de dissipation d'énergie

(30) Priority: 20.05.2009 US 469575
(43) Date of publication of application: 24.11.2010
(73) Proprietor: Dorel France SA, 49309 Cholet Cedex (FR)
(72) Inventor: Marsden, Andrew W, HINGHAM, MA 02043 (US); Fritz, Ward, CHELSEA, MA 02150 (US); Bezaniuk, Walter S., BERKLEY, MA 02779 (US); Langley, Joe, FOXBORO, MA 02035 (US); Amirault, David, EASTON, MA 02356 (US)
(74) Representative: Bioret, Ludovic

(56) References cited:
- EP-A1- 1 167 114
- EP-A2- 0 928 718
- US-A1- 2001 043 001
- US-A1- 2010 026 064
- US-A1- 2010 134 470

## Description

### BACKGROUND

The present disclosure relates to energy-absorbing apparatus, and in particular, to devices for dissipating energy associated with external impact forces. More particularly, the present disclosure relates to an energy-dissipation system included in a juvenile product such as a child-restraint system.

When a vehicle, i.e. a car or truck, is exposed to an external impact force, a juvenile vehicle seat at rest on a seat of the vehicle and an occupant of the juvenile vehicle seat will be subjected to acceleration and deceleration.

A g-load is a measurement of an object's acceleration measured in gs. The g is a non-SI unit equal to the nominal acceleration due to gravity on earth at sea level. A short-term acceleration experienced by a child seated in a juvenile vehicle seat (or any other juvenile seat) that moves suddenly is called a shock and is measured in gs. U.S. published Application US-A1-2001/0043001 (corresponding to the preamble of claim 1) discloses a child seat with movable side head guards designed to protect the head of an infant. The side head guards are provided with a shock absorbing structure comprising a body portion in which air is contained and an outlet for discharging the air in body portion to the outside so that a shock can be absorbed. The present invention aims at providing a juvenile child seat which satisfactorily protects a child exposed to an impact. This object is achieved by a juvenile vehicle seat as defined by claim 1. The dependent claims define preferred and/or advantageous embodiments of the juvenile vehicle seat.

### SUMMARY

An energy-dissipation system in accordance with the present disclosure is included in an apparatus that is exposed to external impact forces. In an illustrative embodiment, the energy-dissipation system is coupled to a juvenile vehicle seat to provide a child-restraint system.

In illustrative embodiments, the energy-dissipation system includes a ride-down pad coupled to a headrest included in a juvenile vehicle seat. The ride-down pad is designed to minimize the g-loads experienced by a child seated in the juvenile vehicle seat during exposure of seat to an external impact force. In other words, the ride-down pad functions to maximize the time interval (or ride-down time) between the moment the external impact force is applied to the ride-down pad and the moment that the resulting force reaches zero. The ride-down pad includes one or more air bags and a deformable bag-shape retainer shield surrounding the one or more air bags.

Each air bag includes an air chamber filled only with air or other suitable fluid to assume an inflated shape. The deformable bag-shape retainer shield surrounds the air bag(s) to block premature deflation of the air bag(s). In other embodiments, the air bag and the retainer shield are the same element. In this case, the air bag is preferably made in a deformable, elastic and/or flexible material, such as ethylene-vinyl acetate (EVA) or low density polyethylene.

When the juvenile vehicle seat is exposed to an external impact force, the deformable bag-shape retainer shield is deformed to expose the air bag(s) stored therein to such a force. The normally inflated air bag(s) deflate to cause the ride-down pad to absorb external energy associated with the external impact force to minimize g-loads experienced by a child seated on the juvenile vehicle seat. In one embodiment, the deformable bag-shape retainer shield is bowl-shaped and in another embodiment, the shield is defined by an endless strip of material.

In illustrative embodiments, the air bag(s) is (are) at air pressure in said inflated shape. In this case, the air-discharge port can include at least one permanent opening in said first bag, so that, in the deflated shape, air is directly removed from the bag.

Additional features of the present disclosure will become apparent to those skilled in the art upon consideration of illustrative embodiments exemplifying the best mode of carrying out the disclosure as presently perceived.

### BRIEF DESCRIPTION OF THE DRAWINGS

The detailed description particularly refers to the accompanying figures in which:

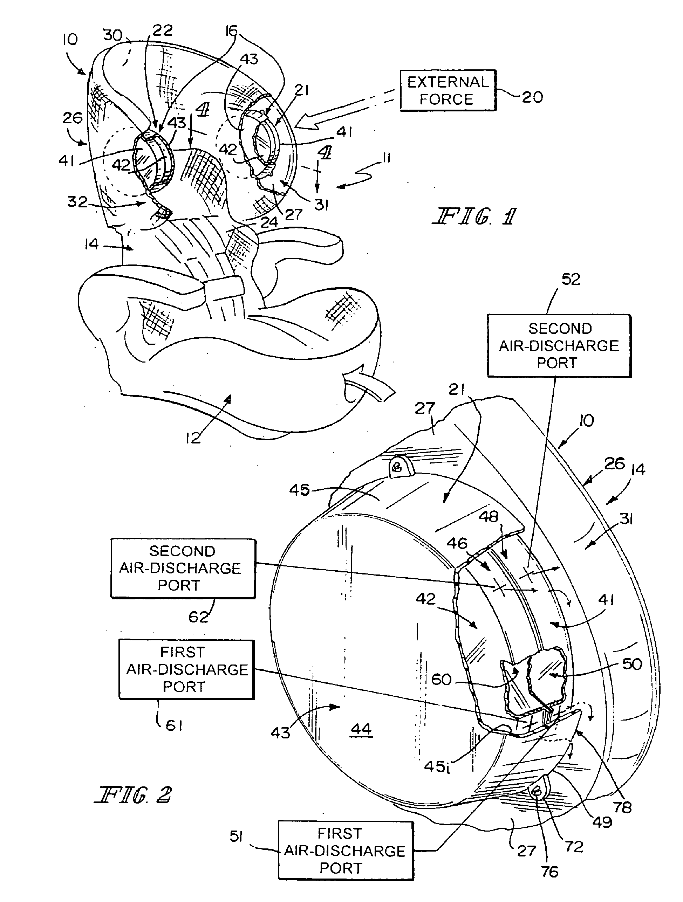

Fig. 1 is a perspective view of a child-restraint system including a juvenile vehicle seat having a seat bottom and a seat back extending upwardly from the seat bottom and an energy-dissipation system coupled to the seat back and made in accordance with a first embodiment of the present disclosure, with portions broken away, and showing that the seat back comprises a backrest coupled to the seat bottom and a headrest coupled to the backrest and that the energy-dissipation system comprises a right-side ride-down pad mounted on an inner wall of a first side-wing panel included in the headrest and a left-side ride-down pad mounted on an inner wall of an opposite second side-wing panel included in the headrest and showing an external impact force about to strike an outer portion of the first side-wing panel carrying the right-side ride-down pad;

Fig. 2 is an enlarged perspective view of the right-side ride-down pad mounted on the first side-wing panel of the headrest shown in Fig. 1, with portions broken away;

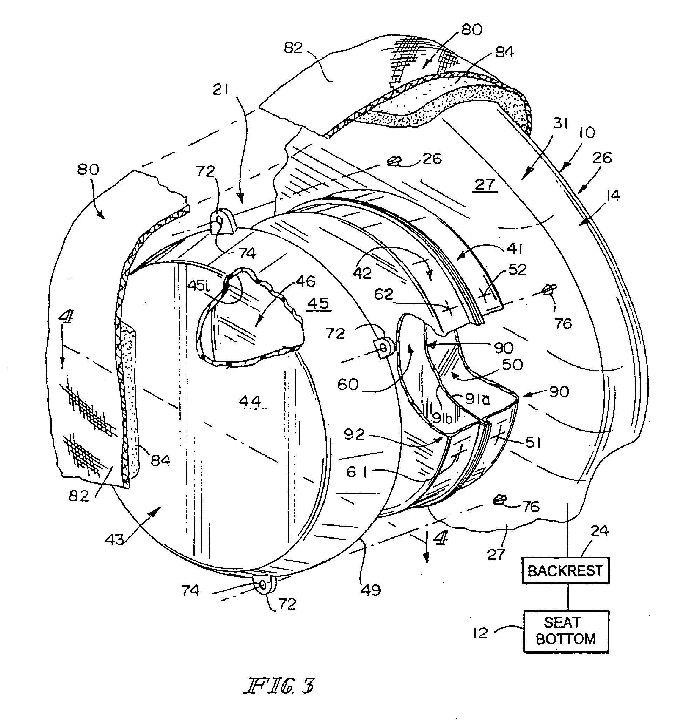

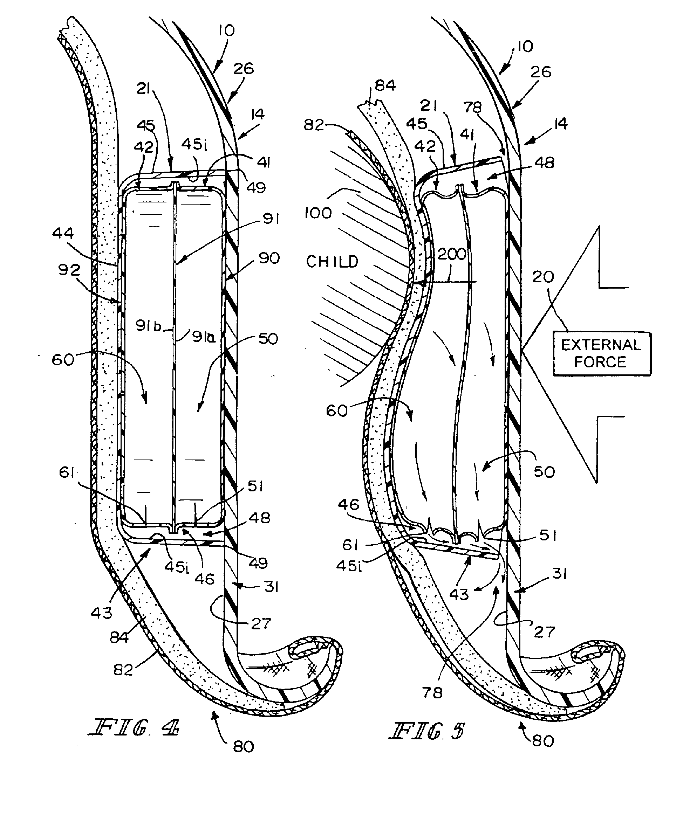

Fig. 3 is an exploded perspective assembly view of the right-side ride-down pad of Fig. 2 showing that the ride-down pad is a multi-stage unit comprising (1) a first (inner) force dissipater including a first vessel (e.g., bag) formed to include a first air chamber and forwardly facing first and second air-discharge ports (e.g., cross-shaped slits) opening into the first air chamber, (2) a second (outer) force dissipater including a second vessel (e.g., bag) formed to include a second air chamber and forwardly facing first and second air-discharge ports (e.g., cross-shaped slits) opening into the second air chamber, and (3) a deformable bag-shape retainer shield configured to mount on the first side-wing panel to retain both of the first and second bags in an inflated shape until the right-side ride-down pad is deformed as suggested in Fig. 5 and showing that the deformable bag-shape retainer shield is defined by a monolithic bowl-shaped component comprising a round top wall and an annular side wall arranged to surround the first and second bags;

Fig. 4 is an enlarged sectional view taken along line 4-4 of Fig. 1 showing placement of the right-side ride-down pad on an inner wall of a first side-wing panel of the headrest before any deformation of the deformable bag-shape retainer shield and deflation of the first and second bags is caused by application of an external impact force to the juvenile seat;

Fig. 5 shows deformation and partial deflation of each of the first and second bags in the right-side ride-down pad following sudden application of an external impact force to the first side-wing panel of the headrest to deform the deformable bag-shape retainer shield covering the first and second bags and showing that air is discharged from the first air chamber in the first bag and the second air chamber in the second bag into an interior region formed in the deformable bag-shape retainer shield when the shield and the first and second bags are deformed and squeezed between a seated child and the external impact force to minimize the magnitude of a resulting force applied to a child seated in a juvenile vehicle seat including the right-side ride-down pad and thereby to minimize the g-load (acceleration) caused by the resulting force and experienced by the seated child;

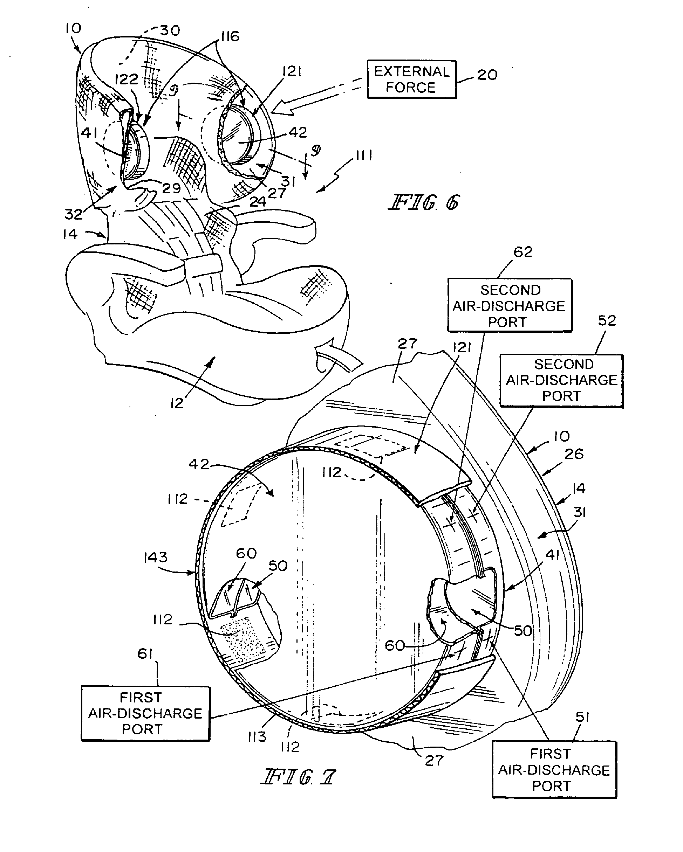

Fig. 6 is a perspective view of a child-restraint system including a juvenile vehicle seat having a seat bottom and a seat back extending upwardly from the seat bottom and an energy-dissipation system coupled to the seat back and made in accordance with a second embodiment of the present disclosure, with portions broken away, and showing that the seat back comprises a backrest coupled to the seat bottom and a headrest coupled to the backrest and that the energy-dissipation system comprises a right-side ride-down pad mounted on an inner wall of a first side-wing panel included in the headrest and a left-side ride-down pad mounted on an inner wall of an opposite second side-wing panel included in the headrest and showing an external impact force about to strike an outer portion of the first side-wing panel carrying the right-side ride-down pad;

Fig. 7 is an enlarged perspective view of the right-side ride-down pad mounted on the first side-wing panel of the headrest shown in Fig. 6, with portions broken away;

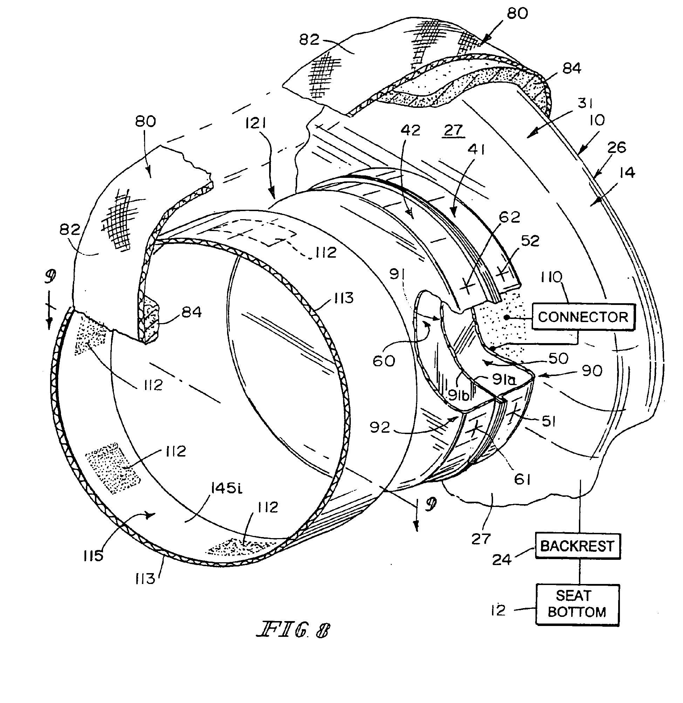

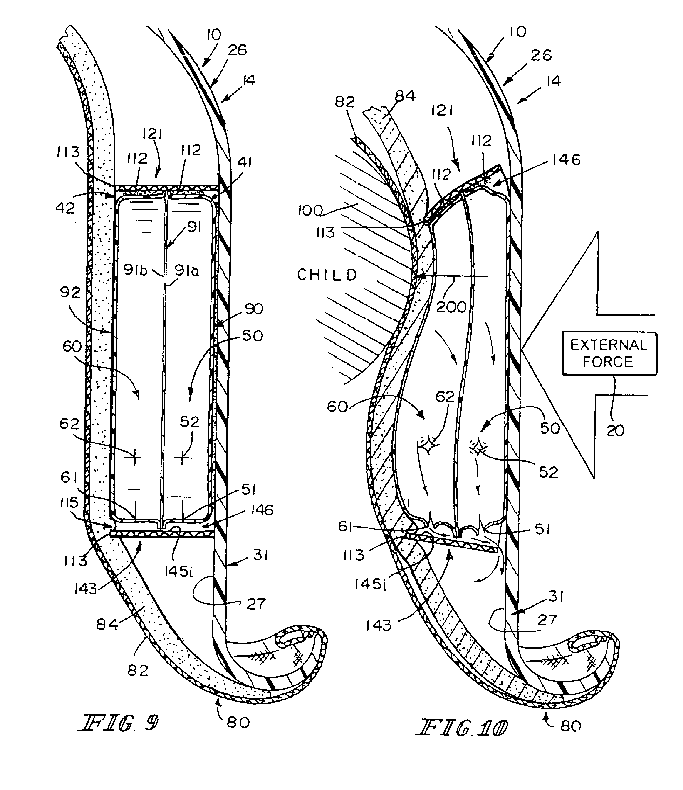

Fig. 8 is an exploded perspective assembly view of the right-side ride-down pad of Fig. 2 showing that the ride-down pad is a multi-stage unit comprising (1) a first (inner) force dissipater including a first vessel (e.g., bag) formed to include a first air chamber and forwardly facing first and second air-discharge ports (e.g., cross-shaped slits) opening into the first air chamber, (2) a second (outer) force dissipater including a second vessel (e.g., bag) formed to include a second air chamber and a forwardly facing first and second air-discharge ports (e.g., cross-shaped slits) opening into the second air chamber, and (3) a deformable bag-shape retainer shield defined by an endless strip of pliable (e.g., corrugated) material and configured to mount on the first-side-wing panel to retain both of the first and second bags in an inflated shape until the right-side ride-down pad is deformed as suggested in Fig. 10;

Fig. 9 is an enlarged sectional view taken along line 9-9 of Fig. 6 showing placement of the right-side ride-down pad on an inner wall of a first side-wing panel of the headrest; and

Fig. 10 shows deformation and partial deflation of each of the first and second bags in the right-side ride-down pad following sudden application of an external impact force to the first side-wing panel of the headrest to deform the deformable bag-shape retainer shield surrounding the first and second bags and showing that air is discharged from the first air chamber in the first bag and the second air chamber in the second bag into an interior region formed in the deformable bag-shape retainer shield when the shield and the first and second bags are deformed and squeezed between a seated child and the external impact force to minimize the magnitude of a resulting force applied to a child seated in a juvenile vehicle seat including the right-side ride-down pad and thereby to minimize the g-load (acceleration) caused by the resulting force and experienced by the seated child.

### DETAILED DESCRIPTION

An illustrative child-restraint system 11 includes a juvenile vehicle seat 10 and an energy-dissipation system 16 coupled to juvenile vehicle seat 10 as suggested in Fig. 1. In illustrative embodiments, juvenile vehicle seat 10 includes a seat bottom 12 and a seat back 14 extending upwardly from seat bottom 12 and carrying energy-dissipation system 16. Another illustrative child-restraint system 111 includes an energy-dissipation system 116 coupled to a seat back 14 of a juvenile vehicle seat 10 as suggested in Fig. 6. It is within the scope of this disclosure to mount energy-dissipation systems 16 or 116 on a juvenile seat or other device to dissipate energy transferred to such a seat or device by means of an external impact force applied to the seat or device.

Each energy-dissipation system 16, 116 comprises a ride-down pad that is designed to minimize the g-loads experienced by a child seated on seat bottom 12 of juvenile vehicle seat 10 during exposure of seat 10 to an external impact force. Ride-down pads 21, 22 in accordance with a first embodiment of the present disclosure are shown, for example, in Figs. 1-5. Ride-down pads 121, 122 in accordance with a second embodiment of the present disclosure are shown, for example, in Figs. 6-10. Reference is hereby made to U.S. published Application US-A-2010/0026064 filed December 4, 2008 for disclosures of various ride-down pad configurations and mounting arrangements.

As suggested in Fig. 1, seat back 12 of juvenile vehicle seat 10 includes a backrest 24 arranged to extend upwardly from seat bottom 12 and a headrest 26 coupled to backrest 24. Right-side ride-down pad 21 is coupled to an inner wall 27 of a first side-wing panel 31 included in headrest 26 as shown in Figs. 1, 2, 9, and 10. Left-side ride-down pad 22 is coupled to an inner wall 29 of a second side-wing panel 32 included in headrest 26 as shown in Fig. 1. A rear panel 30 is included in headrest 26 and arranged to interconnect first and second side-wing panels 31, 32 as suggested in Fig. 1.

During a collision or other incident, application of an external impact force 20 to right-side ride-down pad 21 causes energy to be transferred from an impacting object (not shown) to right-side ride-down pad 21 as suggested in Figs. 1 and 5. Ride-down pad 21 absorbs that transferred energy as suggested in Fig. 5 to minimize the magnitude of a resulting force 200 applied to a child 100 seated in juvenile vehicle seat 10 during the collision. Ride-down pad 21 functions to minimize the g-loads (acceleration) experienced by child 100 seated on seat bottom 12 of juvenile vehicle seat 10 during exposure of seat 10 to external impact force 20 as suggested in Fig. 5. Ride-down pad 21 also functions to maximize the time interval (i.e., ride-down time) between the moment the impacting object strikes ride-down pad 21 to apply the external impact force 20 and the moment that resulting force 200 reaches zero. Each of ride-down pads 22, 121, and 122 functions in a manner similar to ride-down pad 21.

Right-side ride-down pad 21 includes a first bag 41, a second bag 42, and a deformable bag-shape retainer shield 43 providing a protective cover for first and second bags 41, 42 as suggested in Figs. 2-4. Each of first and second bags 41, 42 is inflated normally to assume an inflated shape as shown, for example, in Figs. 1-4. Deformable bag-shape retainer shield 43 is configured to provide means for retaining each of first and second bags 41, 42 in its inflated shape until a sufficient external impact force 20 is applied to juvenile vehicle seat 10 to cause deformation of deformable bag-shape retainer shield 43 as suggested in Fig. 5 so that premature deflation of first and second bags 41, 42 is avoided. Left-side ride-down pad 22 is similar in construction to right-side ride-down pad 21.

First bag 41 is formed to include a first air chamber 50 and normally closed first and second air-discharge parts 51, 52 opening into first air chamber 50 as suggested in Figs. 2-5. First air chamber 50 is filled with air (or other suitable fluid) to cause first bag 41 normally to assume an inflated shape as suggested in Figs. 2-4. In an illustrative embodiment, first air chamber 50 contains only air.

Second bag 42 is formed to include a second air chamber 60 and normally closed first and second air-discharge parts 61, 62 opening into second air chamber 60 as suggested in Figs. 2-5. Second air chamber 60 is filled with air (or other suitable fluid) to cause second bag 42 normally to assume an inflated shape as suggested in Figs. 2-4. In an illustrative embodiment, second air chamber 60 contains only air.

Deformable bag-shape retainer shield 43 includes a top wall 44 and a side wall 45 coupled to top wall 44 to form an interior region 46 containing first and second bags 41, 42 as suggested in Figs. 2-5. Shield 43 is bowl-shaped in an illustrative embodiment and is coupled to inner wall 27 of first side-wing panel 31 of headrest 26 to form a bag-receiving space 48 therebetween, which space 48 is substantially coextensive with interior region 46 of shield 43 as shown, for example, in Fig. 2. Shield 43 is made of a deformable but somewhat rigid (e.g., plastics) material to assume a predetermined shape to shield first and second bags 41, 42 from incidental contact so that first and second bags 41, 42 remain in their inflated shapes until shield 43 is deformed as suggested in Fig. 5 and first and second bags 41, 4 are exposed to an external impact force and deflated partly or fully.

In an illustrative embodiment, top wall 44 of shield 43 is round and side wall 45 is an endless strip having a frustoconical shape as suggested in Figs. 2 and 3. Side wall 45 is arranged to surround a perimeter edge of each of first and second bags 41, 42 as suggested in Fig. 2. Top wall 44 is coupled to side wall 45 to lie in spaced-apart relation to a portion of inner wall 27 of first side-wing panel 31 to locate bag-receiving space 48 therebetween. Side wall 45 has an annular bottom edge 49 arranged normally to mate with inner wall 27 as suggested in Figs. 2 and 4. Top wall 44 is made of a plastics material and arranged to cooperate with side wall 45 (also made of the same plastics material) to form a monolithic element as suggested in Figs. 2-5.

Child restraint 11 also includes anchor means 70 for coupling side wall 45 of deformable bag-shape retainer shield 43 to inner wall 27 of first side-wing panel 31 of headrest 26 as suggested in Figs. 2 and 3. Anchor means 70 includes a mount tab 72 coupled to side wall 45 and formed to include a fastener-receiver aperture 74 and an upstanding fastener 76 coupled to inner wall 27. Fastener 76 is arranged to extend through fastener-receiver aperture 74 as suggested in Figs. 2 and 3 to couple side wall 45 to inner wall 27. In an illustrative embodiment, there is not a sealed connection between side wall 45 and inner wall 27 and side wall 45 may deform somewhat or otherwise provide a vent space 78 between side wall 45 and inner wall 27 as suggested, for example, in Figs. 2 and 5. In the illustrated embodiment, several companion pairs of mount tabs 72 and fasteners 76 are provided around the periphery of side wall 45.

In an illustrative embodiment, an outer cover 80 is coupled to headrest 26 and arranged to cover each of right-side and left-side ride-down pads 21, 22. Outer cover 80 functions to dissipate energy associated with external impact forces 20 and to protect ride-down pads 21, 22 from damage. In an illustrative embodiment, outer cover 80 includes an outer skin 82 and a cushion 84 under outer skin 82 as shown, for example, in Figs. 3-5.

As suggested in Fig. 5, each of first and second air-discharge ports 51, 52 provided in first bag 41 are formed to include means for discharging air from first air chamber 50 to surroundings (e.g., interior region 46 and bag-receiving space 48) outside first bag 41 at a metered rate when first bag 41 is exposed to external impact force 20 after deformation of deformable bag-shape retainer shield 43. Similarly, each of first and second air-discharge ports 61, 62 provided in second bag 42 are formed to include means for discharging air from second air chamber 60 to surroundings (e.g., interior region 46 and bag-receiving space 48) outside second bag 42 at a metered rate when second bag 42 is exposed to external impact force 20 after deformation of deformable bag-shape retainer shield 43. As a result, after shield 43 is deformed, each of first and second bags 41, 42 will be exposed to an external impact force to change from the inflated shape to a deflated shape so that right-side ride down pad 21 absorbs external energy associated with external impact force 20 to minimize g-loads experienced by child 100 seated in juvenile vehicle seat 10.

In the illustrated embodiment, an inner shell 90, and outer shell 92, and a partition 91 located between inner and outer shells 90, 92 cooperate to form first and second bags 41, 42 as suggested in Fig. 4. An inner surface 91a of partition 91 mates with inner shell 90 to form first air chamber 50 therebetween and to define first bag 41. An outer surface 91b of partition 91 mates with outer shell 92 to form second air chamber 60 therebetween and to define second bag 42. Entirely separate first and second bags could also be used and fall within the scope of the present disclosure. Each of air-discharge ports 51, 52, 61, 62 are arranged to face (i.e., open) toward an interior wall 45i of side wall 45 of deformable bag-shape retainer shield 43 as suggested for example, in Figs. 2, 4, and 5.

In a second embodiment of the present disclosure, a child restraint 111 includes right-side and left-side ride-down pads 121, 122 as shown in Fig. 6. In this second embodiment, right-side ride-down pad 121 includes first bag 41, second bag 42, and a deformable bag-shape retainer shield 143 as suggested in Figs. 7-10. Left-side ride-down pad 122 is similar in construction to right-side ride-down pad 121.

Deformable bag-shape retainer shield 143 is configured to provide means for retaining each of first and second bags 41, 42 in its inflated shape until a sufficient external impact force 20 is applied to juvenile vehicle seat 10 to cause deformation of deformable bag-shape retainer shield 143 as suggested in Fig. 10 so that premature deflation of first and second bags 41, 42 is avoided. Deformable bag-shape retainer shield 143 is an endless strip of pliable (e.g., corrugated) material that is arranged to surround perimeter edges of first and second bags 41, 42 as suggested in Figs. 7-10. In one illustrative embodiment, that pliable material is somewhat bendable and shapeable when exposed to external impact forces 20 as suggested in Fig. 10. In another illustrative embodiment, that pliable material is relatively inelastic and is crushed when deformed.

Deformable bag-shape retainer shield 143 is formed to include an interior region 146 containing first and second bags 41, 42 therein as suggested in Figs. 7, 9, and 10. In an illustrative embodiment, first bag 41 is coupled to inner wall 27 of first side-wing panel 31 using a connector 110 (e.g., adhesive or hook-and-loop fastener) as suggested in Fig. 8 and perimeter edges of first and second bags 41, 42 are coupled to an interior wall 145i of shield 143 using adhesive 112 or other suitable connector as suggested in Figs. 7-10. Each of air-discharge ports 51, 52, 61, 62 are arranged to face (i.e., open) toward an interior wall 145i of shield 43 as suggested, for example, in Figs. 7, 9, and 10.

Deformable bag-shape retainer shield 143 includes a top edge 113 configured to form a top aperture 115 opening into a bag-receiving space defined by interior region 146. Second bag 42 is arranged to occlude top aperture 115 when first and second bags 41, 42 are arranged to lie in interior region 146 to assume their inflated shapes as suggested in Figs. 7 and 9.

According to other embodiments, a sole bag, or vessel, is provided on each side of the seat. It can be made in the same way as the bags 41, 42 previously disclosed.

The retainer shield can be removed in some embodiments, the air bag and the retainer shield being the same element. In this case, the air bag is preferably made in a deformable, elastic and/or flexible material, such as ethylene-vinyl acetate (EVA) or low density polyethylene.

The thickness of this airbag is selected (e.g. between 1 and 2 mm) so as to allow a deformation of the walls of the bag in the elastic domain, when it is compressed. These walls are elastic so that the bag comes back to its original shape when the constraint is removed.

The rigidity of the walls is defined so that they provide a resistance to an applied strain, when the constraint is slow and/or limited. In return, in case of impact, the wall is capable of deformation, allowing a variation, notably a reduction of the internal volume of the bag. Consequently, an outflow of the air contained in the bag is provided, through the openings in the bags.

In this case, the controlled resistance due to the outflow prevails on the elastic deformation of the walls, providing for energy dissipation.

According to at least one embodiment, the first air bag, and the second one, if any, is at air pressure in said inflated shape. In this case, the air-discharge port can include at least one permanent opening in said first bag, so that, in the deflated shape, air is directly removed from the bag. After absorption of the external impact force, the bag is filled up with air at air pressure, through the opening(s), and comes back in the inflated shape.

## Claims

1. A juvenile vehicle seat (10) comprising an energy-dissipation system (16, 116) including a first ride-down pad (21, 22; 121, 122) including at least a first bag (41) formed to form a first air chamber (50) and a first air-discharge port (51) opening into the first air chamber (50), the first air chamber (50) in the first bag (41) being filled with air to cause the first bag (41) normally to assume an inflated shape, the first air-discharge port (51) being formed to include means for discharging air from the first air chamber (50) to surroundings outside the first bag (41) at a metered rate when the first bag (41) is exposed to an external impact force to change from the inflated shape to a deflated shape so that the first ride-down pad (21, 22; 121, 122) absorbs external energy associated with the external impact force to minimize g-loads experienced by a child seated in the juvenile vehicle seat (10), **characterized in that** the first ride-down pad (21, 22; 121, 122) includes a deformable bag-shape retainer shield (43, 143) coupled to the juvenile vehicle seat to form a bag-receiving space (48) in which the first bag (41) is located, the bag-receiving space (48) being bound at least in part by the juvenile vehicle seat (10) and the deformable bag-shape retainer shield (43, 143), the deformable bag-shape retainer shield (43, 143) being made of a deformable material to assume a predetermined shape to retain the first bag (41) in the inflated shape until the deformable bag-shape retainer shield (43, 143) is deformed and the first bag (41) is exposed to the external impact force.

2. The juvenile vehicle seat (10) of claim 1, **characterized in that** the deformable bag-shape retainer shield (43) includes a side wall (45) arranged to surround a perimeter edge of the first air bag (41) and a top wall (44) coupled to the side wall (45) to lie in spaced-apart relation to the juvenile vehicle seat (10) to locate the bag-receiving space therebetween, the top wall (44) is arranged to cooperate with the side wall (45) to form an interior region of the deformable bag-shape retainer shield (43, 143), and the first bag (41) is retained in the interior region in the inflated shape until the deformable bag-shape retainer shield (43) is deformed to apply an external impact force to the first bag (41) to cause air in the first air chamber to be discharged through the first air-discharge port (51) and to cause the first bag (41) to assume the deflated shape.

3. The juvenile vehicle seat (10) of claim 2, **characterized in that** the first ride-down pad further includes a second bag (42) formed to include a second air chamber (60) and a normally closed second air-discharge port (62) opening into the second air chamber (60), the second air chamber (60) in the second bag (42) is filled with air to cause the second bag (42) normally to assume an inflated shape, the second bag (42) is arranged to lie in the bag-receiving space in a position located between the first bag (41) and the top wall of the deformable bag-shape retainer shield (43), the second air-discharge port (62) is formed to include means for discharging air from the second air chamber (60) into the interior region of the deformable bag-shape retainer shield (43) at a metered rate in response to exposure of the second bag (42) to an external impact force caused by deformation of the deformable bag-shape retainer shield (43).

4. The juvenile vehicle seat (10) of any of claim 1 to 3, **characterized in that** each of the first and/or second air chambers (50, 60) contains only air when the first and second bags (41, 42) are retained in their inflated shapes.

5. The juvenile vehicle seat (10) of claim 2, **characterized in that** the side wall (45) is defined by an endless strip of a plastics material.

6. The juvenile vehicle seat (10) of claim 1, **characterized in that** the deformable bag-shape retainer shield (143) is an endless strip of pliable material arranged to surround a perimeter edge of the first bag (41).

7. The juvenile vehicle seat (10) of claim 6, **characterized in that** the first bag (41) is coupled to the juvenile vehicle seat (10) and the deformable bag-shape retainer shield (143) is coupled to the first bag (41) to allow movement of the deformable bag-shape retainer shield (143) relative to the juvenile vehicle seat (10) during discharge of air from the first air chamber (50) through the first air-discharge port (51) as the first bag (41) is changed from the inflated shape to the deflated shape.

8. The juvenile vehicle seat (10) of claim 7, **characterized in that** the first ride-down pad (121) further includes a second bag (42) formed to include a second air chamber (60) and a normally closed second air-discharge port (62) opening into the second air chamber (60), the second air chamber (60) in the second bag (42) is filled with air to cause the second bag (42) normally to assume an inflated shape, the second bag (42) is located in the bag-receiving space normally to remain in the inflated shape, the second air-discharge port (62) is formed to include means for discharging air from the second air chamber (60) to surroundings outside the second bag (42) at a metered rate when the second bag (42) is exposed to an external impact force to change from the inflated shape to a deflated shape, the second bag (42) is arranged to lie in spaced-apart relation to the juvenile vehicle seat (10) to trap the first bag (41) between the juvenile vehicle seat (10) and the second bag (42), and the endless strip of pliable material is arranged to surround perimeter edges of both of the first and second bags (41, 42).

9. The juvenile vehicle seat (10) of claim 1, **characterized in that** the first bag (41) is made of a deformable material to assume a predetermined shape in the inflated shape, until said first bag (41) is exposed to said external force.

10. The juvenile vehicle seat (10) of claim 9, **characterized in that** said deformable material is ethylene-vinyl acetate or low density polyethylene.

11. The juvenile vehicle seat (10) of claim 9, **characterized in that** the thickness of said deformable material is between 1 and 2 mm.

12. The juvenile vehicle seat (10) of claim 1, **characterized in that** said first air-discharge port (51) is normally closed, in said inflated shape.

13. The juvenile vehicle seat (10) of claim 1, **characterized in that** said first bag (41) is at air pressure in said inflated shape.

14. The juvenile vehicle seat (10) of claim 13, **characterized in that** said first air-discharge port (51) includes at least one permanent opening in said first bag (41).

## Patentansprüche

1. Fahrzeugkindersitz (10), der ein Energiedissipationssystem (16, 116) umfasst, das ein erstes Ableitkissen (engl. Ride-Down-Pad) (21, 22; 121, 122) aufweist, das mindestens einen ersten Sack (41) aufweist, der dafür ausgebildet ist, eine erste Luftkammer (50) und eine erste Luftaustrittsöffnung (51), die sich zur ersten Luftkammer (50) öffnet, zu bilden, wobei die erste Luftkammer (50) in dem ersten Sack (41) mit Luft gefüllt ist, um zu bewirken, dass der erste Sack (41) normalerweise eine aufgeblasene Form annimmt, wobei die erste Luftaustrittsöffnung (51) derart ausgebildet ist, dass sie Mittel aufweist, um Luft aus der ersten Luftkammer (50) in die Umgebung außerhalb des ersten Sacks (41) mit einem dosierten Durchsatz abzulassen, wenn der erste Sack (41) einer äußeren Aufprallkraft ausgesetzt ist, um seine Form von der aufgeblasenen Form in eine entleerte Form zu ändern, so dass das erste Ableitkissen (21, 22; 121, 122) äußere Energie absorbiert, die mit der äußeren Aufprallkraft verbunden ist, um g-Belastungen zu minimieren, die auf ein in dem Fahrzeugkindersitz (10) sitzendes Kind einwirken, **dadurch gekennzeichnet, dass** das erste Ableitkissen (21, 22; 121, 122) einen verformbaren sackförmigen Aufnahmeschutz(43, 143) aufweist, der mit dem Fahrzeugkindersitz gekoppelt ist, um einen Sackaufnahmeraum (48) zu bilden, in welchem der erste Sack (41) angeordnet ist, wobei der Sackaufnahmeraum (48) mindestens teilweise durch den Fahrzeugkindersitz (10) und den verformbaren sackförmigen Aufnahmeschutz(43, 143) begrenzt ist, wobei der verformbare sackförmige Aufnahmeschutz (43, 143) aus einem verformbaren Material hergestellt ist, um eine vorbestimmte Form anzunehmen, um den ersten Sack (41) in der aufgeblasenen Form zu halten, bis der verformbare sackförmige Aufnahmeschutz (43, 143) verformt wird und der erste Sack (41) der äußeren Aufprallkraft ausgesetzt wird.

2. Fahrzeugkindersitz (10) nach Anspruch 1, **dadurch gekennzeichnet, dass** der verformbare sackförmige Aufnahmeschutz (43) eine Seitenwand (45) aufweist, die dafür eingerichtet ist, einen Umfangsrand des ersten Luftsacks (41) zu umgeben, und eine Deckenwand (44), die mit der Seitenwand (45) gekoppelt ist, so dass sie sich in einer beabstandeten Beziehung zu dem Fahrzeugkindersitz (10) befindet, so dass der Sackaufnahmeraum dazwischen angeordnet ist, dass die Deckenwand (44) dafür eingerichtet ist, mit der Seitenwand (45) zusammenzuwirken, um einen inneren Bereich des verformbaren sackförmigen Aufnahmeschutzes (43, 143) zu bilden, und dass der erste Sack (41) in dem inneren Bereich in der aufgeblasenen Form gehalten wird, bis der verformbare sackförmige Aufnahmeschutz (43) verformt wird, um eine äußere Aufprallkraft auf den ersten Sack (41) auszuüben, um zu bewirken, dass Luft in der ersten Luftkammer durch die erste Luftaustrittsöffnung (51) abgelassen wird, und zu bewirken, dass der erste Sack (41) die entleerte Form annimmt.

3. Fahrzeugkindersitz (10) nach Anspruch 2, **dadurch gekennzeichnet, dass** das erste Ableitkissen ferner einen zweiten Sack (42) aufweist, der dafür ausgebildet ist, eine zweite Luftkammer (60) und eine normalerweise geschlossene zweite Luftaustrittsöffnung (62), die sich zur zweiten Luftkammer (60) öffnet, aufzuweisen, dass die zweite Luftkammer (60) in dem zweiten Sack (42) mit Luft gefüllt ist, um zu bewirken, dass der zweite Sack (42) normalerweise eine aufgeblasene Form annimmt, dass der zweite Sack (42) dafür ausgebildet ist, sich in dem Sackaufnahmeraum in einer Position zu befinden, die zwischen dem ersten Sack (41) und der Deckenwand des verformbaren sackförmigen Aufnahmeschutzes (43) angeordnet ist, dass die zweite Luftaustrittsöffnung (62) derart ausgebildet ist, dass sie Mittel aufweist, um in Reaktion auf die Exposition des zweiten Sacks (42) gegenüber einer äußeren Aufprallkraft, die durch eine Verformung des verformbaren sackförmigen Aufnahmeschutzes (43) verursacht wird, Luft aus der zweiten Luftkammer (60) in den inneren Bereich des verformbaren sackförmigen Aufnahmeschutzes (43) mit einem dosierten Durchsatz abzulassen.

4. Fahrzeugkindersitz (10) nach einem der Ansprüche 1 bis 3, **dadurch gekennzeichnet, dass** jede der ersten und/oder zweiten Luftkammer (50, 60) nur dann Luft enthält, wenn der erste und der zweite Sack (41, 42) in ihren aufgeblasenen Formen gehalten werden.

5. Fahrzeugkindersitz (10) nach Anspruch 2, **dadurch gekennzeichnet, dass** die Seitenwand (45) durch ein Endlosband aus einem Kunststoffmaterial gebildet wird.

6. Fahrzeugkindersitz (10) nach Anspruch 1, **dadurch gekennzeichnet, dass** der verformbare sackförmige Aufnahmeschutz (143) ein Endlosband aus biegsamem Material ist, das dafür eingerichtet ist, einen Umfangsrand des ersten Sacks (41) zu umgeben.

7. Fahrzeugkindersitz (10) nach Anspruch 6, **dadurch gekennzeichnet, dass** der erste Sack (41) mit dem Fahrzeugkindersitz (10) gekoppelt ist und der verformbare sackförmige Aufnahmeschutz (143) mit dem ersten Sack (41) gekoppelt ist, um eine Bewegung des verformbaren sackförmigen Aufnahmeschutzes (143) relativ zu dem Fahrzeugkindersitz (10) während des Ablassens von Luft aus der ersten Luftkammer (50) durch die erste Luftaustrittsöffnung (51) zu ermöglichen, wenn der erste Sack (41) von der aufgeblasenen Form in die entleerte Form überführt wird.

8. Fahrzeugkindersitz (10) nach Anspruch 7, **dadurch gekennzeichnet, dass** das erste Ableitkissen (121) ferner einen zweiten Sack (42) aufweist, der dafür ausgebildet ist, eine zweite Luftkammer (60) und eine normalerweise geschlossene zweite Luftaustrittsöffnung (62), die sich in die zweite Luftkammer (60) öffnet, aufzuweisen, dass die zweite Luftkammer (60) in dem zweiten Sack (42) mit Luft gefüllt ist, um zu bewirken, dass der zweite Sack (42) normalerweise eine aufgeblasene Form annimmt, dass der zweite Sack (42) in dem Sackaufnahmeraum normalerweise so angeordnet ist, dass er in der aufgeblasenen Form verbleibt, dass die zweite Luftaustrittsöffnung (62) derart ausgebildet ist, dass sie Mittel aufweist, um Luft aus der zweiten Luftkammer (60) in die Umgebung außerhalb des zweiten Sacks (42) mit einem dosierten Durchsatz abzulassen, wenn der zweite Sack (42) einer äußeren Aufprallkraft ausgesetzt ist, um seine Form von der aufgeblasenen Form in eine entleerte Form zu ändern, dass der zweite Sack (42) dafür eingerichtet ist, sich in einer beabstandeten Beziehung zu dem Fahrzeugkindersitz (10) zu befinden, um den ersten Sack (41) zwischen dem Fahrzeugkindersitz (10) und dem zweiten Sack (42) einzuschließen, und dass das Endlosband aus biegsamem Material dafür eingerichtet ist, die Umfangsränder sowohl des ersten als auch des zweiten Sacks (41, 42) zu umgeben.

9. Fahrzeugkindersitz (10) nach Anspruch 1, **dadurch gekennzeichnet, dass** der erste Sack (41) aus einem verformbaren Material hergestellt ist, um in der aufgeblasenen Form eine vorbestimmte Gestalt anzunehmen, bis der erste Sack (41) der äußeren Kraft ausgesetzt wird.

10. Fahrzeugkindersitz (10) nach Anspruch 9, **dadurch gekennzeichnet, dass** das verformbare Material Ethylenvinylacetat oder Polyethylen mit niedriger Dichte ist.

11. Fahrzeugkindersitz (10) nach Anspruch 9, **dadurch gekennzeichnet, dass** die Dicke des verformbaren Materials zwischen 1 und 2 mm liegt.

12. Fahrzeugkindersitz (10) nach Anspruch 1, **dadurch gekennzeichnet, dass** die erste Luftaustrittsöffnung (51) in der aufgeblasenen Form normalerweise geschlossen ist.

13. Fahrzeugkindersitz (10) nach Anspruch 1, **dadurch gekennzeichnet, dass** der erste Sack (41) in der aufgeblasenen Form unter Luftdruck steht.

14. Fahrzeugkindersitz (10) nach Anspruch 13, **dadurch gekennzeichnet, dass** die erste Luftaustrittsöffnung (51) mindestens eine permanente Öffnung in dem ersten Sack (41) aufweist.

## Revendications

1. Siège de véhicule pour enfants (10) comprenant un système de dissipation d'énergie (16, 116) comprenant un premier patin de ralentissement avant arrêt (21, 22 ; 121, 122) comprenant au moins un premier coussin (41) formé pour former une première chambre à air (50) et un premier orifice d'évacuation d'air (51) donnant dans la première chambre à air (50), la première chambre à air (50) dans le premier coussin (41) étant remplie avec de l'air pour faire en sorte que le premier coussin (41) présente normalement une forme gonflée, le premier orifice d'évacuation d'air (51) étant formé pour comprendre des moyens pour évacuer de l'air à partir de la première chambre à air (50) vers les environs à l'extérieur du premier coussin (41) à une vitesse régulée lorsque le premier coussin (41) est exposé à une force d'impact externe pour changer de la forme gonflée à une forme dégonflée pour que le premier patin de ralentissement avant arrêt (21, 22 ; 121, 122) absorbe l'énergie externe associée à la force d'impact externe pour minimiser des charges centrifuges subies par un enfant assis dans le siège de véhicule pour enfants (10), **caractérisé en ce que** le premier patin de ralentissement avant arrêt (21, 22 ; 121, 122) comprend un écran de retenue en forme de coussin déformable (43, 143) accouplé avec le siège de véhicule pour enfants pour former un espace de réception de coussin (48) dans lequel le premier coussin (41) est positionné, l'espace de réception de coussin (48) étant borné au moins en partie par le siège de véhicule pour enfants (10) et l'écran de retenue en forme de coussin déformable (43, 143), l'écran de retenue en forme de coussin déformable (43, 143) étant fait d'un matériau déformable pour présenter une forme prédéterminée pour maintenir le premier coussin (41) dans la forme gonflée jusqu'à ce que l'écran de retenue en forme de coussin déformable (43, 143) soit déformé et le premier coussin (41) soit exposé à la force d'impact externe.

2. Siège de véhicule pour enfants (10) selon la revendication 1, **caractérisé en ce que** l'écran de retenue en forme de coussin déformable (43) comprend une paroi latérale (45) agencée pour entourer un bord périmétrique du premier coussin de sécurité gonflable (41) et une paroi supérieure (44) accouplée avec la paroi latérale (45) pour se trouver dans une relation espacée par rapport au siège de véhicule pour enfants (10) pour positionner l'espace de réception de coussin entre ceux-ci, la paroi supérieure (44) est agencée pour coopérer avec la paroi latérale (45) pour former une région intérieure de l'écran de retenue en forme de coussin déformable (43, 143), et le premier coussin (41) est maintenu dans la région intérieure dans la forme gonflée jusqu'à ce que l'écran de retenue en forme de coussin déformable (43) soit déformé pour appliquer une force d'impact externe sur le premier coussin (41) pour faire en sorte que l'air dans la première chambre à air soit évacué à travers le premier orifice d'évacuation d'air (51) et pour faire en sorte que le premier coussin (41) présente la forme dégonflée.

3. Siège de véhicule pour enfants (10) selon la revendication 2, **caractérisé en ce que** le premier patin de ralentissement avant arrêt comprend en outre un deuxième coussin (42) formé pour comprendre une deuxième chambre à air (60) et un deuxième orifice d'évacuation d'air normalement fermé (62) donnant dans la deuxième chambre à air (60), la deuxième chambre à air (60) dans le deuxième coussin (42) est remplie avec de l'air pour faire en sorte que le deuxième coussin (42) présente normalement une forme gonflée, le deuxième coussin (42) est agencé pour se trouver dans l'espace de réception de coussin dans une position entre le premier coussin (41) et la paroi supérieure de l'écran de retenue en forme de coussin déformable (43), le deuxième orifice d'évacuation d'air (62) est formé pour comprendre des moyens pour évacuer de l'air à partir de la deuxième chambre à air (60) dans la région intérieure de l'écran de retenue en forme de coussin déformable (43) à une vitesse régulée en réponse à l'exposition du deuxième coussin (42) à une force d'impact externe entraînée par déformation de l'écran de retenue en forme de coussin déformable (43).

4. Siège de véhicule pour enfants (10) selon une quelconque revendication 1 à 3, **caractérisé en ce que** chacune des première et/ou deuxième chambres à air (50, 60) contient seulement de l'air lorsque les premier et deuxième coussins (41, 42) sont maintenus dans leurs formes gonflées.

5. Siège de véhicule pour enfants (10) selon la revendication 2, **caractérisé en ce que** la paroi latérale (45) est définie par une bande sans fin d'un matériau plastique.

6. Siège de véhicule pour enfants (10) selon la revendication 1, **caractérisé en ce que** l'écran de retenue en forme de coussin déformable (143) est une bande sans fin de matériau flexible agencée pour entourer un bord périmétrique du premier coussin (41).

7. Siège de véhicule pour enfants (10) selon la revendication 6, **caractérisé en ce que** le premier coussin (41) est accouplé avec le siège de véhicule pour enfants (10) et l'écran de retenue en forme de coussin déformable (143) est accouplé avec le premier coussin (41) pour permettre le mouvement de l'écran de retenue en forme de coussin déformable (143) par rapport au siège de véhicule pour enfants (10) durant l'évacuation d'air à partir de la première chambre à air (50) à travers le premier orifice d'évacuation d'air (51) lorsque le premier coussin (41) est changé de la forme gonflée à la forme dégonflée.

8. Siège de véhicule pour enfants (10) selon la revendication 7, **caractérisé en ce que** le premier patin de ralentissement avant arrêt (121) comprend en outre un deuxième coussin (42) formé pour comprendre une deuxième chambre à air (60) et un deuxième orifice d'évacuation d'air normalement fermé (62) donnant dans la deuxième chambre à air (60), la deuxième chambre à air (60) dans le deuxième coussin (42) est remplie avec de l'air pour faire en sorte que le deuxième coussin (42) présente normalement une forme gonflée, le deuxième coussin (42) est positionné dans l'espace de réception de coussin normalement pour rester dans la forme gonflée, le deuxième orifice d'évacuation d'air (62) est formé pour comprendre des moyens pour évacuer de l'air à partir de la deuxième chambre à air (60) vers les environs à l'extérieur du deuxième coussin (42) à une vitesse régulée lorsque le deuxième coussin (42) est exposé à une force d'impact externe pour changer de la forme gonflée à une forme dégonflée, le deuxième coussin (42) est agencé pour se trouver dans une relation espacée par rapport au siège de véhicule pour enfants (10) pour piéger le premier coussin (41) entre le siège de véhicule pour enfants (10) et le deuxième coussin (42), et la bande sans fin de matériau flexible est agencée pour entourer des bords périmétriques des premier et deuxième coussins (41, 42).

9. Siège de véhicule pour enfants (10) selon la revendication 1, **caractérisé en ce que** le premier coussin (41) est fait d'un matériau déformable pour présenter une forme prédéterminée dans la forme gonflée, jusqu'à ce que ledit premier coussin (41) soit exposé à ladite force externe.

10. Siège de véhicule pour enfants (10) selon la revendication 9, **caractérisé en ce que** ledit matériau déformable est de l'éthylène-acétate de vinyle ou du polyéthylène à basse densité.

11. Siège de véhicule pour enfants (10) selon la revendication 9, **caractérisé en ce que** l'épaisseur dudit matériau déformable est entre 1 et 2 mm.

12. Siège de véhicule pour enfants (10) selon la revendication 1, **caractérisé en ce que** ledit premier orifice d'évacuation d'air (51) est normalement fermé, dans ladite forme gonflée.

13. Siège de véhicule pour enfants (10) selon la revendication 1, **caractérisé en ce que** ledit premier coussin (41) est à la pression de l'air dans ladite forme gonflée.

14. Siège de véhicule pour enfants (10) selon la revendication 13, **caractérisé en ce que** ledit premier orifice d'évacuation d'air (51) comprend au moins une ouverture permanente dans ledit premier coussin (41).
